# EUROPÄISCHE PATENTSCHRIFT

(11) **EP 3 407 699 B1**
(45) Veröffentlichungstag und Bekanntmachung des Hinweises auf die Patenterteilung: **25.12.2019**
(21) Anmeldenummer: 17702351.2
(22) Anmeldetag: 27.01.2017
(51) Int. Cl.: A01C 23/00, A01B 73/06, A01M 7/00

(54) **GÜLLEVERTEILER**
LIQUID MANURE DISTRIBUTOR
DISPOSITIF D'ÉPANDAGE DE FUMIER

(30) Priorität: 29.01.2016 DE 202016100457 U
(43) Veröffentlichungstag der Anmeldung: 05.12.2018
(73) Patentinhaber: Fliegl Agrartechnik GmbH, 84453 Mühldorf am Inn (DE)
(72) Erfinder: FLIEGL, SEN., Josef, 84556 Kastl (DE)
(74) Vertreter: Nußbaum, Christopher
(86) Internationale Anmeldenummer: PCT/EP2017/051776
(87) Internationale Veröffentlichungsnummer: WO 2017/129748

(56) Entgegenhaltungen:
- EP-A2- 1 525 784
- DE-U1-202006 008 173
- US-A- 6 042 020

## Beschreibung

Die Erfindung betrifft einen Gülleverteiler der im Oberbegriff des Anspruchs 1 angegeben Art.

Ein gattungsgemäßer Gülleverteiler ist aus der DE 20 2014 105 317 U1 bekannt. Der darin gezeigte Gülleverteiler umfasst ein Güllefass und ein Gülleverteilersystem zum Verteilen von im Güllefass aufgenommener Gülle. Das Gülleverteilersystem weist einen zentralen Verteilerarm und zwei verschwenkbar daran angeordnete seitliche Verteilerarme auf. Die seitlichen Verteilerarme sind zwischen einer mit dem zentralen Verteilerarm fluchtenden Stellung und einer quer zum zentralen Verteilerarm ausgerichteten Stellung verschwenkbar. Zudem ist der zentrale Verteilerarm zwischen einer nach unten geklappten Arbeitsstellung und einer nach oben geklappten Transportstellung um wenigstens eine Querachse verschwenkbar. Die seitlichen Verteilerarme können also aus- und eingeklappt werden. Dadurch kann zum einen ein besonders breiter Bereich mit Gülle versorgt und zum anderen eine jeweils länderspezifisch zulässige Maximalbreite des Gülleverteilers beim Befahren von öffentlichen Straßen eingehalten werden. In der nach unten geklappten Arbeitsstellung kann mittels an den Verteilerarmen angebrachter Schläuche die Gülle dem Boden zugeführt werden. In der nach oben geklappten Transportstellung sind jeweilige Schlauchöffnungen der Schläuche nach oben gerichtet, so dass keine Gülle aus den Schläuchen austreten kann.

Um die Verteilarme in der beschriebenen Weise Verschwenken und gleichzeitig sichern zu können, ist eine relativ aufwendige Verstellmechanik erforderlich.

Die DE 20 2006 008173 U1 zeigt einen Gülleverteiler mit einem Gülleverteilersystem, welches einen zentralen Verteilerarm und zwei verschwenkbar daran angeordnete seitliche Verteilerarme aufweist, welche zwischen einer mit dem zentralen Verteilerarm fluchtenden Stellung und einer quer zum zentralen Verteilerarm ausgerichteten Stellung verschwenkbar sind. Der zentrale Verteilerarm ist zudem zwischen einer nach unten geklappten Arbeitsstellung und einer nach oben geklappten Transportstellung um wenigstens eine Querachse verschwenkbar.

Es ist daher die Aufgabe der vorliegenden Erfindung, einen Gülleverteiler bereitzustellen, welcher eine besonders große Bearbeitungsbreite aufweist und dessen Verteilerarme gleichzeitig auf besonders einfache Weise zusammengeklappt und gesichert werden kann.

Diese Aufgabe wird durch einen Gülleverteiler mit den Merkmalen des Anspruchs 1 gelöst. Vorteilhafte Ausgestaltungen mit zweckmäßigen und nicht-trivialen Weiterbildungen der Erfindung sind in den abhängigen Ansprüchen angegeben.

Der erfindungsgemäße Gülleverteiler umfasst ein Gülleverteilersystem, welches einen zentralen Verteilerarm und zwei verschwenkbar daran angeordnete seitliche Verteilerarme aufweist, welche zwischen einer mit dem zentralen Verteilerarm fluchtenden Stellung und einer quer zum zentralen Verteilerarm ausgerichteten Stellung verschwenkbar sind, wobei der zentrale Verteilerarm zwischen einer nach unten geklappten Arbeitsstellung und einer nach oben geklappten Transportstellung um wenigstens eine Querachse verschwenkbar ist. Das Gülleverteilersystem ist vorzugsweise mit einem Güllefass des Gülleverteilers verbunden, sodass mittels des Gülleverteilersystems in dem Güllefass aufgenommene Gülle verteilt werden kann, beispielsweise auf einem Acker oder auf einer Wiese.

Dabei ist es erfindungsgemäß vorgesehen, dass die wenigstens eine Querachse in wenigstens einem sich in Hochrichtung des Gülleverteilers erstreckenden Langloch zwischen einer unteren Stellung und einer oberen Stellung translatorisch beweglich geführt ist. Die Verteilerarme können dadurch nicht nur verschwenkt sondern auch höhenverstellt werden. Denn wandert die Querachse in dem Langloch nach oben oder nach unten, so wandert auch eine aus den Verteilerarmen ausgebildete Verteileranordnung nach oben oder nach unten. Ein weiterer unabhängiger Aspekt der Erfindung betrifft zudem ein derartiges Gülleverteilersystem, welches Teil eines Gülleverteilers sein kann. Ferner kann das Gülleverteilersystem entsprechend der nachfolgenden Beschreibung weitergebildet sein.

Vorzugsweise sind seitlich neben dem Güllefass jeweilige Aufnahmeeinrichtungen mit seitlichen Haltelementen angeordnet, wobei in der Transportstellung jeweilige Unterseiten der seitlichen Verteilerarme bei in der oberen Stellung angeordneter Querachse oberhalb von jeweiligen Oberseiten der Haltelemente und bei in der unteren Stellung angeordneter Querachse unterhalb von den Oberseiten der Haltelementen angeordnet sind. Die Aufnahmeeinrichtungen dienen dazu, die seitlichen Verteilerarme aufzunehmen, wenn die seitlichen Verteilerarme hochgeklappt und quer zum zentralen Verteilerarm ausgerichtet sind. Beispielsweise können die seitlichen Verteilerarme derart verschwenkt werden, dass diese sich parallel zur Längsrichtung des Güllefasses erstrecken, also an jeweiligen Längsseiten des Güllefasses angeordnet sind.

Dadurch, dass die wenigstens eine Querachse in wenigstens einem sich in Hochrichtung des Gülleverteilers erstreckenden Langloch zwischen einer unteren Stellung und einer oberen Stellung translatorisch beweglich geführt ist, können die seitlichen Verteilerarme so weit nach oben angehoben werden, dass diese über die Halteelemente hinweg bewegt und anschließend wiederum abgesenkt werden können. Beispielsweise weisen die Aufnahmeeinrichtungen jeweilige Auflageflächen zum Aufnehmen der seitlichen Verteilerarme auf, welche seitlich von den Haltelementen begrenzt werden. Die Haltelemente dienen als Transportsicherung für die angeklappten seitlichen Verteilerarme, sodass diese während der Fahrt sicher an den Aufnahmeeinrichtungen angelegt gehalten werden können. Sobald die seitlichen Verteilerarme von den Aufnahmeeinrichtungen wegbewegt und aufgeklappt werden sollen, können die seitlichen Verteilerarme zusammen mit dem zentralen Verteilerarm angehoben werden. Dabei wandert die zumindest eine Querachse in dem Langloch nach oben, bis die Querachse den obersten Punkt des Langlochs erreicht hat.

Mittels der erfindungsgemäßen Lösung, die wenigstens eine Querachse in wenigstens einem sich in Hochrichtung des Gülleverteilers erstreckenden Langloch zwischen einer unteren Stellung und einer oberen Stellung translatorisch beweglich geführt auszubilden, können die seitlichen Verteilerarme also bei Bedarf auf besonders einfache Weise angehoben und abgesenkt werden.

Eine vorteilhafte Ausführungsform der Erfindung sieht vor, dass der Gülleverteiler ein vertikales Traggerüst umfasst, welches das Langloch aufweist, an welchem zumindest ein Schwenkarm mit einem Ende mittels der Querachse angebracht und mit einem gegenüberliegenden Ende mit dem zentralen Verteilerarm verbunden ist. Vorzugsweise ist der zentrale Verteilerarm über zwei Schwenkarme verschwenkbar am vertikalen Traggerüst gehalten. Die beiden Schwenkarme sind dabei über jeweilige Querachsen verschwenkbar gelagert, wobei die beiden Querachsen in jeweiligen, sich zumindest im Wesentlichen in Hochrichtung des vertikalen Traggerüsts erstreckenden Langlöchern geführt sind. Die Schwenkarme sind also mit einem Ende am zentralen Verteilerarm und mit einem gegenüberliegenden Ende am vertikalen Traggerüst befestigt. Durch Auf- und Abschwenken der Schwenkarme kann somit der zentrale Verteilerarm auf- und abgeschwenkt werden. Ferner können die Schwenkarme in den Langlöchern nach oben und nach unten wandern, wodurch auch der zentrale Verteilerarm und somit auch die daran befestigen seitlichen Verteilerarme entsprechend der Länge des Langlochs nach oben und nach unten bewegt werden können.

Gemäß einer weiteren vorteilhaften Ausführungsform der Erfindung ist es vorgesehen, dass am zentralen Verteilerarm zumindest eine Rolle angebracht ist, welche am vertikalen Traggerüst anliegt, wenn sich der zentrale Verteilerarm in der nach oben geklappten Transportstellung befindet. In der nach unten geklappten Arbeitsstellung ist die Rolle von dem vertikalen Traggerüst entfernt. Wird allerdings der zentrale Verteilerarm von der nach unten geklappten Arbeitsstellung in die nach oben geklappte Transportstellung verschwenkt, so gelangt die zumindest eine Rolle in Anlage mit dem vertikalen Traggerüst. Wandert nun das vertikale Traggerüst nach oben, weil sich die wenigstens eine Querachse im wenigstens einen Langloch in die obere Stellung bewegt, so rollt die Rolle auf dem vertikalen Traggerüst ab. Infolgedessen kann der zentrale Verteilerarm ohne große Widerstände nach oben bewegt werden.

In weiterer vorteilhafter Ausgestaltung der Erfindung ist es vorgesehen, dass der Gülleverteiler zumindest einen mit dem zentralen Verteilerarm oder mit dem Schwenkarm verbundenen Hydraulikzylinder zum Verschwenken des zentralen Verteilerarms zwischen der nach unten geklappten Arbeitsstellung und der nach oben geklappten Transportstellung umfasst. Durch Betätigung des Hydraulikzylinders kann der zentrale Verteilerarm auf einfache Weise verschwenkt und höhenverstellt werden, infolgedessen auch die seitlichen Verteilerarme gemeinsam mit dem zentralern Verteilerarm auf und ab verschwenkt sowie höhenverstellt werden können.

Eine weitere vorteilhafte Ausführungsform der Erfindung sieht vor, dass die seitlichen Verteilerarme mittels jeweiliger am zentralen Verteilerarm angeordneter Hydraulikzylinder zwischen der fluchtenden Stellung und der quer zum zentralen Verteilerarm ausgerichteten Stellung verschwenkbar sind.

Zudem sieht eine weitere vorteilhafte Ausführungsform der Erfindung vor, dass die seitlichen Verteilerarme starre Rohre zum Transportieren der Gülle aufweisen, an welchen jeweilige Verteilerbehälter mit Gülleauslassöffnungen angebracht sind. Die starren Rohre haben zudem eine tragende Funktion hinsichtlich der Verteilerarme. Durch das Vorsehen der Rohre bzw. starren Rohrleitungen müssen weniger flexible Schlauchleitungen am Gülleverteilersystem vorgesehen werden, um die Gülle aus dem Güllefass z.B. auf ein Feld zu befördern.

In weiterer vorteilhafter Ausgestaltung der Erfindung ist es vorgesehen, dass an den Verteilerbehältern jeweils eine Auffangvorrichtung zum Aufnehmen von in der Gülle enthaltenden Fremdkörpern angeordnet ist, welche eine federbelastete und hydraulisch betätigbare Verschlusseinrichtung umfasst. Mittels der Auffangvorrichtung können also in der Gülle enthaltende Fremdkörper aufgenommen und bei Bedarf entfernt werden. Durch die federbelastete Verschlusseinrichtung wird die Auffangvorrichtung bis zum Erreichen eines bestimmten Befüllungsgrads der Auffangvorrichtung bzw. bis ein bestimmter Druck in der Auffangvorrichtung aufgebaut worden ist, verschlossen gehalten. Zudem kann die Verschlusseinrichtung auch hydraulisch bei Bedarf geöffnet werden, so dass mittels der Auffangvorrichtung aufgenommene Fremdkörper auf einfache Weise aus der Auffangvorrichtung herausfallen können.

Vorzugsweise ist an den Verteilerbehältern jeweils ein Zerkleinerer zum Zerkleinern von in der Gülle enthaltenen Fremdkörpern angeordnet. In der Gülle enthaltene Fremdkörper können dadurch auf zuverlässige Weise zerkleinert werden, um zu verhindern, dass die Verteilerbehälter verstopfen.

Schließlich ist es gemäß einer weiteren vorteilhaften Ausführungsform der Erfindung vorgesehen, dass in den Verteilerbehältern jeweils eine Förderschnecke zum Befördern der in der Gülle enthaltenen Fremdkörper in Richtung der Auffangvorrichtung angeordnet ist. Die Fremdkörper werden dadurch in den Auffangvorrichtungen abgeschieden, welche vorzugsweise hydraulisch geöffnet werden können, um diese zu entleeren.

Weitere Vorteile, Merkmale und Einzelheiten der Erfindung ergeben aus der nachfolgenden Beschreibung bevorzugter Ausführungsbeispiele sowie anhand der Zeichnung. Die vorstehend in der Beschreibung genannten Merkmale Merkmalskombinationen sowie die nachfolgend in der Figurenbeschreibung genannten Merkmale und Merkmalskombinationen sind dabei sowohl in Alleinstellung als auch in Kombination untereinander verwendbar, ohne den Rahmen der Erfindung zu verlassen.

Die Zeichnung zeigt in:
- Fig. 1: eine Perspektivansicht eines Gülleverteilers mit einem Güllefass zum Bereitstellen Gülle und einem Gülleverteilersystem, welches einen zentralen Verteilerarm und zwei verschwenkbar daran angeordnete seitliche Verteilerarme aufweist, wobei die Verteilerarme in einer ausgeklappten und nach unten verschwenkten Arbeitsstellung angeordnet sind;
- Fig. 2: eine Detailansicht eines am Gülleverteilersystem angebrachten Zerkleinerers, mittels welchem in der Gülle enthaltende Fremdkörper zerkleinert werden können;
- Fig. 3: eine Detailansicht einer am Gülleverteilersystem angebrachten Auffangvorrichtung für die in der Gülle enthaltenen Fremdkörper;
- Fig. 4: eine weitere Perspektivansicht des Gülleverteilers, wobei die Verteilerarme in einer eingeklappten und nach oben verschwenkten Transportstellung angeordnet sind;
- Fig. 5: eine Detailansicht einer in einem Langloch angeordneten Querachse, um welche der zentrale Verteilerarm verschwenkbar ist, wobei die Querachse an einem unteren Ende des Langlochs angeordnet ist;
- Fig. 6: eine Detailansicht einer Aufnahmeeinrichtung, welche zum Aufnehmen von einer der seitlichen Verteilerarme dient, wenn diese in der eingeklappten und nach oben verschwenkten Transportstellung angeordnet sind;
- Fig. 7: eine Detailansicht einer am zentralen Verteilerarm angeordneten Rolle, welche an einem vertikalen Traggerüst anliegt, sodass der zentrale Verteilerarm besonders widerstandsarm in vertikaler Richtung auf und ab bewegt werden kann;
- Fig. 8: eine weitere Perspektivansicht des Gülleverteilers, wobei einer der seitlichen Verteilerarme gerade ausgeklappt wird und der andere seitliche Verteilerarm noch eingeklappt ist; und in
- Fig. 9: eine weitere Detailansicht der im Langloch angeordneten Querachse, wobei die Querachse an einem oberen Ende des Langlochs angeordnet ist.

In den Figuren werden gleiche oder funktionsgleiche Elemente mit den gleichen Bezugszeichen versehen.

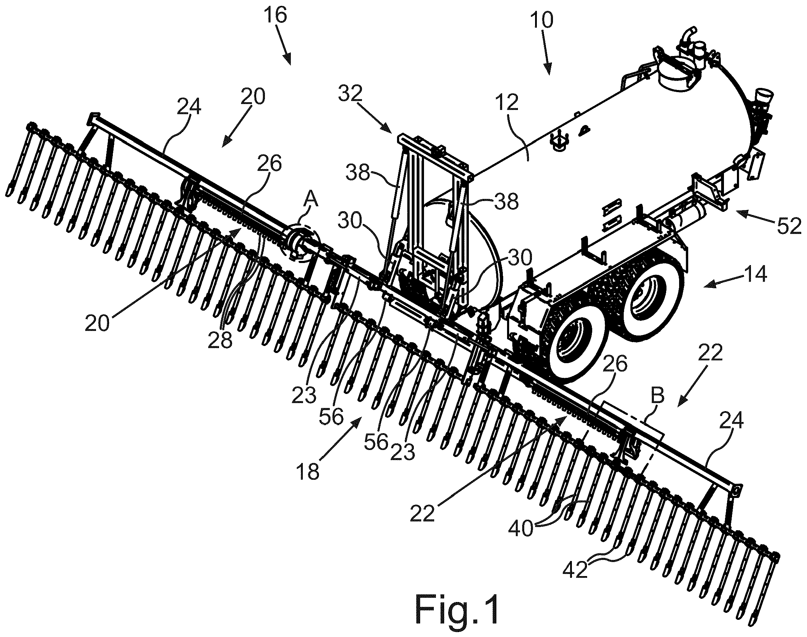

Ein insgesamt mit 10 bezeichneter Gülleverteiler ist in einer Perspektivansicht in Fig. 1 gezeigt. Der Gülleverteiler 10 umfasst ein Güllefass 12, welches oberhalb von einem Fahrwerk 14 angeordnet ist. Des Weiteren umfasst der Gülleverteiler 10 ein Gülleverteilersystem 16. Das Gülleverteilersystem 16 weist einen zentralen Verteilerarm 18 und zwei verschwenkbar daran angeordnete seitliche Verteilerarme 20, 22 auf.

Die Verteilerarme 20, 22 sind vorliegend in einer mit dem zentralen Verteilerarm 18 fluchtenden, ausgeklappten Stellung angeordnet Die seitlichen Verteilerarme 20, 22 sind mittels jeweiliger nicht näher bezeichneter Scharniere an jeweiligen Außenseiten des zentralen Verteilerarms 18 angebracht. Dadurch können die seitlichen Verteilerarme 20, 22 gegenüber dem zentralen Verteilerarm 18 mittels jeweiliger Hydraulikzylinder 23 verschwenkt werden.

Die seitlichen Verteilerarme 20, 22 umfassenden jeweilige starre Rohrleitungen 24, welche mit einem Ausgang des Güllefasses 12 verbunden werden können. Dadurch kann im Güllefass 12 aufgenommen Gülle durch hier nicht näher dargestellte Schläuche in die Rohrleitungen 24 befördert werden. An den Rohrleitungen 24 sind jeweils Verteilerbehälter 26 mit einer Vielzahl von Gülleauslassöffnungen 28 angeordnet.

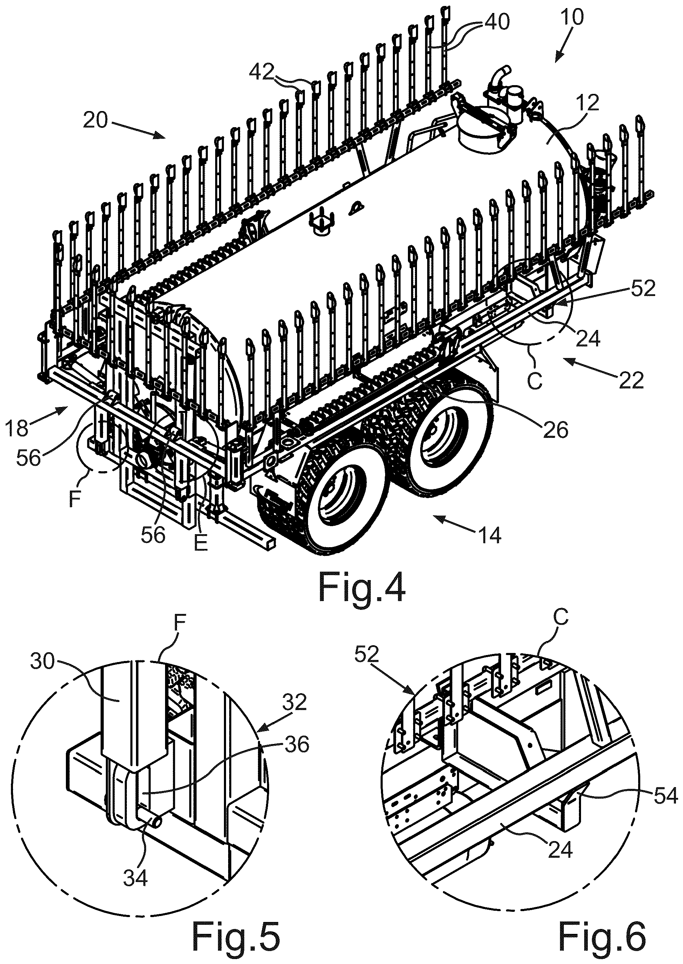

Der zentrale Verteilerarm 18 ist zudem über zwei Schwenkarme 30 mit einem vertikalen Traggerüst 32 verbunden. An jeweiligen Enden der beiden Schwenkarme 30 sind Querachsen 34 hindurchgeführt, welche in Langlöchern 36 angeordnet sind, die an dem vertikalen Traggerüst 32 vorgesehen sind (siehe Fig. 5). Zwei Hydraulikzylinder 38 sind am vertikalen Traggerüst 32 und an den Schwenkarmen 30 angebracht. Mittels der Hydraulikzylinder 38 können die Verteilerarme 18, 20, 22 von der hier gezeigten, nach unten geklappten Arbeitsstellung nach oben in eine Transportstellung verschwenkt werden, indem der zentrale Verteilerarm 18 um die beiden Querachsen 34 verschwenkt wird.

In der Arbeitsstellung weisen jeweilige, an den Verteilerarmen 18, 20, 22 angeordnete Blattfedern 40 und an deren Enden angebrachte Schlitzschuhe 42 nach unten. Die Blattfedern 40 drücken dabei die Schlitzschuhe 42 mit einer bestimmten Kraft auf den Boden, wodurch die Schlitzschuhe 42 den Boden zerfurchen. Mittels der Schlitzschuhe 42 können hier nicht dargestellte flexible Schläuche aufgenommen werden, welche mit dem Gülleauslassöffnungen 28 an den Verteilerbehältern 26 verbunden sind. Mittels der hier nicht dargestellten und an den Schlitzschuhen 42 angebrachten Schläuche kann dann die Gülle in den zerfurchten Boden eingebracht werden.

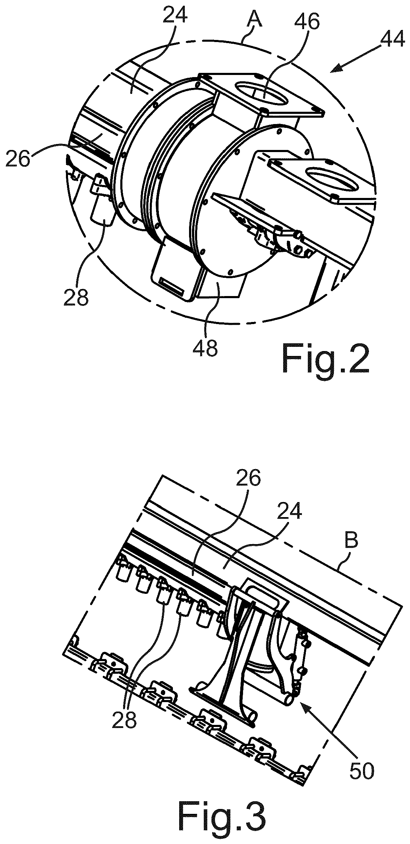

In Fig. 2 ist ein in Fig. 1 gekennzeichneter Ausschnitt A in einer vergrößerten Darstellung gezeigt, wobei ein Zerkleinerer 44 für die in der Gülle enthaltenen Fremdkörper dargestellt ist. Durch eine Zuführöffnung 46 des Zerkleinerers 44 kann beispielsweise über einen mit dem Güllefass 12 verbundenen, hier nicht dargestellten Schlauch Gülle in den Zerkleinerer 44 zugeführt werden. Die zerkleinerten Fremdkörper setzen sich teilweise in einem Auffangbehälter 48 ab und können aus diesem entnommen werden.

Die durch den Zerkleinerer 44 hindurchgeleitete Gülle fließt anschließend durch den Verteilerbehälter 26 und aus den Gülleauslassöffnungen 28 heraus. In den beiden Verteilerbehältern 26 des Gülleverteilersystems 16 sind hier nicht dargestellte Förderschnecken angeordnet. Die Förderschnecken werden vorzugsweise mit 30 bis 60 Umdrehungen pro Minute betrieben und haben zumindest primär nicht die Aufgabe, die Gülle zu verteilen, sondern die Fremdkörper nach außen in jeweilige an den Verteilerbehältern 26 angebrachte Auffangvorrichtungen 50 zu befördern. Ein Zeitrelais wird vorzugsweise so eingestellt, dass die Förderschnecken ca. 40 Sekunden nach außen und 5 Sekunden nach innen fördern, also die in der Gülle enthaltenen und in die Verteilerbehälter 26 gelangten Fremdkörper wesentliche länger in Richtung der Auffangvorrichtungen 50 statt in Richtung der Zerkleinerer 44 fördern. Durch die alternierende Förderrichtung der Förderschnecken wird das Risiko eines Verstopfens der Verteilerbehälter 26 verringert.

In Fig. 3 ist ein in Fig. 1 gekennzeichneter Ausschnitt B in einer vergrößerten Darstellung gezeigt, wobei einer der beiden Auffangvorrichtungen 50 des Gülleverteilersystems 16 gezeigt ist. Die Auffangvorrichtungen 50 dienen zum Aufnehmen von in der Gülle enthaltenden Fremdkörpern, welche mittels der Förderschnecken bis zu den Auffangvorrichtungen 50 befördert worden sind. Die Auffangvorrichtungen 50 umfassen jeweils eine nicht näher bezeichnete federbelastete und hydraulisch betätigbare Verschlusseinrichtung. Die Auffangvorrichtungen 50 werden bis zu einem bestimmen Innendruck bzw. bis diese mit den Fremdkörpern vollständig befüllt sind, federbelastet verschlossen gehalten. Über Hydraulikzylinder können die Auffangvorrichtungen 50 geöffnet werden, um diese zu entleeren.

In Fig. 4 ist der Gülleverteiler 10 in einer weiteren Perspektivansicht gezeigt, wobei die Verteilerarme 18, 20, 22 in die besagte Transportstellung nach oben geklappt und die seitlichen Verteilerarme 20, 22 in Richtung des Güllefasses 12 eingeklappt worden sind. Beide seitlichen Verteilerarme 20, 22 liegen auf jeweiligen Aufnahmeeinrichtungen 52 auf, welche seitlich neben dem Güllefass 12 angeordnet sind.

In Fig. 5 ist ein in Fig. 4 gekennzeichneter Ausschnitt F in einer vergrößerten Darstellung gezeigt, wobei einer der bereits erwähnten Querachsen 34 zu erkennen ist, welche in einem der ebenfalls bereits erwähnten Langlöcher 36 geführt ist. Wenn die seitlichen Verteilerarme 20, 22 auf den Aufnahmeeinrichtungen 52 abgelegt worden sind, befinden sich die beiden Querachsen 34 in ihrer unterstmöglichen Stellung in den jeweiligen Langlöchern 36.

In Fig. 6 ist ein in Fig. 4 gekennzeichneter Ausschnitt C in einer vergrößerten Darstellung gezeigt, wobei die Aufnahmeeinrichtung 52 in einer Perspektivansicht gezeigt wird. Die Aufnahmeeinrichtung 52 umfasst ein seitliches Halteelement 54, welches verhindert, dass die Rohrleitung 24 und somit der seitliche Verteilerarm 22 nach außen aufschwenkt, solange sich die beiden Querachsen 34 in ihrer unterstmöglichen Stellung in den jeweiligen Langlöchern 36 befinden.

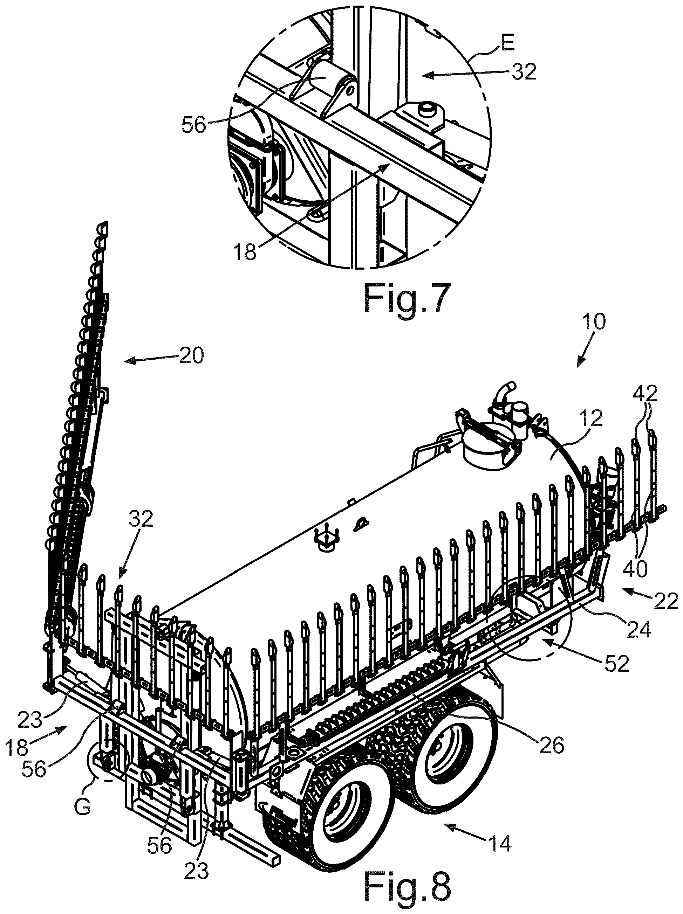

In Fig. 7 ein in Fig. 4 gekennzeichneter Ausschnitt E in einer vergrößerten Darstellung gezeigt, wobei eine von zwei Rollen 56 dargestellt ist, welche am zentralen Verteilerarm 18 angebracht ist. Sobald der zentrale Verteilerarm 18 in die nach oben geschwenkte Transportstellung verschwenkt worden ist, kommen die Rollen 56 in Anlage mit dem vertikalen Traggerüst 32. Durch Einfahren der am vertikalen Traggerüst 32 angebrachten Hydraulikzylinder 38 wird zum einen der zentrale Verteilerarm 18 nach oben geschwenkt und zum anderen wandern die Querachsen 34 in den Langlöchern 36 nach oben. Der sich dadurch translatorisch nach oben bewegende Verteilerarm 18 kann mittels der Rollen 56 an dem vertikalen Traggerüst 32 abrollen.

In Fig. 8 ist der Gülleverteiler 10 in einer weiteren Perspektivansicht gezeigt, wobei der linke seitliche Verteilerarm 20 gerade nach außen ausgeklappt wird und der rechte seitliche Verteilerarm 22 noch eingeklappt ist.

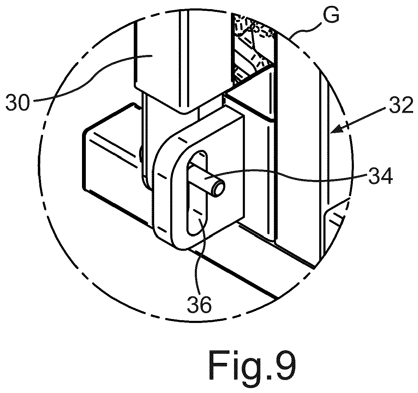

In Fig. 9 ist ein in Fig. 8 gekennzeichneter Ausschnitt G in einer vergrößerten Darstellung gezeigt, wobei der linke der beiden Querachsen 34, welche im linken Langloch 36 geführt ist, dargestellt ist. Wie zu erkennen, ist die Querachse 34 nicht mehr wie in Fig. 5 in der unterstmöglichen Position im Langloch 36 angeordnet. Stattdessen ist die Querachse 34 im Langloch 36 aufgrund einer entsprechenden Betätigung der am vertikalen Traggerüst 32 angeordneten Hydraulikzylinder 38 nach oben gewandert und befindet sich fast an der oberstmöglichen Position im Langloch 36.

Dadurch, dass der zentrale Verteilerarm 18 mittels der beiden Schwenkarme 30 mit den Querachsen 34 verbunden ist, wandert auch der zentrale Verteilerarm 18 entsprechend nach oben. Da die beiden seitlichen Verteilerarme 20, 22 wiederum am zentralen Verteilerarm 18 befestigt sind, wandern diese ebenfalls entsprechend der vertikalen Bewegung der Querachsen 34 in den Langlöchern 36 nach oben.

Infolgedessen bewegen sich die beiden seitlichen Verteilerarme 20, 22 so weit translatorisch nach oben, dass diese sich nicht mehr im Eingriffsbereich der seitlichen Haltelemente 54 befinden. Die seitlichen Verteilerarme 20, 22 können dadurch problemlos über die seitlichen Halteelemente 54 hinwegbewegt werden. Somit können die seitlichen Verteilerarme 20, 22 ganz einfach in Richtung des Güllefasses 12 verschwenkt werden, bis diese an den Haltelementen 54 vorbeibewegt worden sind. Anschließend werden die seitlichen Verteilerarme 20, 22 durch eine entsprechende Betätigung der Hydraulikzylinder 38 abgesenkt, sodass die seitlichen Verteilerarme 20, 22 auf den Aufnahmeeinrichtungen 52 aufliegen und mittels der seitlichen Haltelemente 54 davor bewahrt werden, nach außen wegzuschwenken.

Sollen die seitlichen Verteilerarme 18, 20 aufgeschwenkt, also von dem Güllefalls 12 weggeschwenkt werden, werden die Hydraulikzylinder 38 eingefahren. Dadurch bewegen sich die Querachsen 34 in den Langlöchern 36 nach oben und somit auch die seitlichen Verteilerarme 20, 22 nach oben, sodass sich diese irgendwann nicht mehr im Eingriffsbereich der seitlichen Halteelemente 54 befinden. Anschließend können die seitlichen Verteilerarme 20, 22 dann durch eine entsprechende Betätigung der Hydraulikzylinder 23 nach außen geschwenkt werden, bis die seitlichen Verteilerarme 20, 22 mit dem zentralen Verteilerarm 18 fluchten. Danach können die Hydraulikzylinder 38 ausgefahren werden, wodurch die Verteilerarme 18, 20, 22 nach unten in die in Fig. 1 gezeigte Arbeitsstellung verschwenkt werden.

### BEZUGSZEICHENLISTE:

- 10: Gülleverteiler
- 12: Güllefass
- 14: Fahrwerk
- 16: Gülleverteilersystem
- 18: zentraler Verteilerarm
- 20: seitlicher Verteilerarm
- 22: seitlicher Verteilerarm
- 23: Hydraulikzylinder
- 24: Rohrleitung
- 26: Verteilerbehälter
- 28: Gülleauslassöffnung
- 30: Schwenkarm
- 32: vertikales Traggerüst
- 34: Querachse
- 36: Langloch
- 38: Hydraulikzylinder
- 40: Blattfeder
- 42: Schlitzschuh
- 44: Zerkleinerer
- 46: Zuführöffnung
- 48: Auffangbehälter
- 50: Auffangvorrichtung
- 52: Aufnahmeeinrichtung
- 54: seitliches Halteelement
- 56: Rolle

## Patentansprüche

1. Gülleverteiler (10) mit einem Gülleverteilersystem (16), welches einen zentralen Verteilerarm (18) und zwei verschwenkbar daran angeordnete seitliche Verteilerarme (20, 22) aufweist, welche zwischen einer mit dem zentralen Verteilerarm (18) fluchtenden Stellung und einer quer zum zentralen Verteilerarm (18) ausgerichteten Stellung verschwenkbar sind, wobei der zentrale Verteilerarm (18) zwischen einer nach unten geklappten Arbeitsstellung und einer nach oben geklappten Transportstellung um wenigstens eine Querachse (34) verschwenkbar ist,
**dadurch gekennzeichnet, dass**
die wenigstens eine Querachse (34) in wenigstens einem sich in Hochrichtung des Gülleverteilers (10) erstreckenden Langloch (36) zwischen einer unteren Stellung und einer oberen Stellung translatorisch beweglich geführt ist.

2. Gülleverteiler (10) nach Anspruch 1,
**dadurch gekennzeichnet, dass**
seitlich neben einem Güllefass (12) des Gülleverteilers (10) jeweilige Aufnahmeeinrichtungen (52) mit seitlichen Haltelementen (54) angeordnet sind, wobei in der Transportstellung jeweilige Unterseiten der seitlichen Verteilerarme (20, 22) bei in der oberen Stellung angeordneter Querachse (34) oberhalb von jeweiligen Oberseiten der Haltelemente (54) und bei in der unteren Stellung angeordneter Querachse (34) unterhalb von den Oberseiten der Haltelemente (54) angeordnet sind.

3. Gülleverteiler (10) nach Anspruch 1 oder 2,
**dadurch gekennzeichnet, dass**
der Gülleverteiler (10) ein vertikales Traggerüst (32) umfasst, welches das Langloch (36) aufweist, an welchem zumindest ein Schwenkarm (30) mit einem Ende mittels der Querachse (34) angebracht und mit einem gegenüberliegenden Ende mit dem zentralen Verteilerarm (18) verbunden ist.

4. Gülleverteiler (10) nach Anspruch 3,
**dadurch gekennzeichnet, dass**
am zentralen Verteilerarm (18) zumindest eine Rolle (56) angebracht ist, welche am vertikalen Traggerüst (32) anliegt, wenn sich der zentrale Verteilerarm (18) in der nach oben geklappten Transportstellung befindet.

5. Gülleverteiler (10) nach einem der vorhergehenden Ansprüche,
**dadurch gekennzeichnet, dass**
der Gülleverteiler (10) zumindest einen mit dem zentralen Verteilerarm (18) verbundenen Hydraulikzylinder (38) zum Verschwenken des zentralen Verteilerarms (18) zwischen der nach unten geklappten Arbeitsstellung und der nach oben geklappten Transportstellung umfasst.

6. Gülleverteiler (10) nach einem der Ansprüche 3 oder 4,
**dadurch gekennzeichnet, dass**
der Gülleverteiler (10) zumindest einen mit dem Schwenkarm (30) verbundenen Hydraulikzylinder (38) zum Verschwenken des zentralen Verteilerarms (18) zwischen der nach unten geklappten Arbeitsstellung und der nach oben geklappten Transportstellung umfasst

7. Gülleverteiler (10) nach einem der vorhergehenden Ansprüche,
**dadurch gekennzeichnet, dass**
die seitlichen Verteilerarme (20, 22) mittels jeweiliger am zentralen Verteilerarm (18) angeordneter Hydraulikzylinder (23) zwischen der fluchtenden Stellung und der quer zum zentralen Verteilerarm (18) ausgerichteten Stellung verschwenkbar sind.

8. Gülleverteiler (10) nach einem der vorhergehenden Ansprüche,
**dadurch gekennzeichnet, dass**
die seitlichen Verteilerarme (20, 22) starre Rohre (24) zum Transportieren der Gülle aufweisen, an welchen jeweilige Verteilerbehälter (26) mit Gülleauslassöffnungen (28) angebracht sind.

9. Gülleverteiler (10) nach Anspruch 8,
**dadurch gekennzeichnet, dass**
an den Verteilerbehältern (26) jeweils eine Auffangvorrichtung (50) zum Aufnehmen von in Gülle enthaltenden Fremdkörpern angeordnet ist, welche eine federbelastete und hydraulisch betätigbare Verschlusseinrichtung umfasst.

10. Gülleverteiler (10) nach Anspruch 9,
**dadurch gekennzeichnet, dass**
an den Verteilerbehältern (26) jeweils ein Zerkleinerer (44) zum Zerkleinern von in der Gülle enthaltenen Fremdkörpern angeordnet ist.

11. Gülleverteiler (10) nach Anspruch 9 oder 10,
**dadurch gekennzeichnet, dass**
in den Verteilerbehältern (26) jeweils eine Förderschnecke zum Befördern der in der Gülle enthaltenen Fremdkörper in Richtung der Auffangvorrichtung (50) angeordnet ist.

## Claims

1. Slurry distributor (10) having a slurry distributor system (16) which has a central distributor arm (18) and two lateral distributor arms (20, 22) pivotably arranged thereon, which are pivotable between a position aligning with the central distributor arm (18) and a position aligning transversely with respect to the central distributor arm (18), wherein the central distributor arm (18) is pivotable about at least one transverse axis (34) between a working position folded downwards and a transport position folded upwards,
**characterised in that**
the at least one transverse axis (34) is translatably movably guided between a lower position and an upper position in at least one slotted hole (36) extending in the upward direction of the slurry distributor (10).

2. Slurry distributor (10) according to claim 1,
**characterised in that**
respective receiving devices (52) with lateral holding elements (54) are arranged laterally next to a slurry barrel (12) of the slurry distributor (10), wherein, in the transport position, respective undersides of the lateral distributor arms (20, 22) are arranged above respective upper sides of the holding elements (54) when the transverse axis (34) is arranged in the upper position, and below the upper sides of the holding elements (54) when the transverse axis (34) is arranged in the lower position.

3. Slurry distributor (10) according to claim 1 or 2,
**characterised in that**
the slurry distributor (10) comprises a vertical support frame (32) which has the slotted hole (36) to which at least one pivot arm (30) with one end is attached by means of the transverse axis (34) and is connected to the central distributor arm (18) with an opposite end.

4. Slurry distributor (10) according to claim 3,
**characterised in that**
at least one roller (56) is attached to the central distributor arm (18) and bears against the vertical supporting frame (32) when the central distributor arm (18) is in the upwardly folded transport position.

5. Slurry distributor (10) according to any one of the preceding claims,
**characterised in that**
the slurry distributor (10) comprises at least one hydraulic cylinder (38) connected to the central distributor arm (18) for pivoting the central distributor arm (18) between the working position folded downwards and the transport position folded upwards.

6. Slurry distributor (10) according to either one of claims 3 or 4,
**characterised in that**
the slurry distributor (10) comprises at least one hydraulic cylinder (38) connected to the pivot arm (30) for pivoting the central distributor arm (18) between the working position folded downwards and the transport position folded upwards.

7. Slurry distributor (10) according to any one of the preceding claims,
**characterised in that**
the lateral distributor arms (20, 22) are pivotable between the aligned position and the position aligned transversely to the central distributor arm (18) by means of respective hydraulic cylinders (23) arranged on the central distributor arm (18).

8. Slurry distributor (10) according to any one of the preceding claims,
**characterised in that**
the lateral distributor arms (20, 22) comprise rigid tubes (24) for transporting the slurry, to which respective distributor containers (26) with slurry outlet openings (28) are attached.

9. Slurry distributor (10) according to claim 8,
**characterised in that**
a collecting device (50) for receiving foreign bodies contained in slurry is arranged in each case on the distributor containers (26), which collecting device comprises a spring-loaded and hydraulically actuable closing device.

10. Slurry distributor (10) according to Claim 9,
**characterised in that**
a comminutor (44) for comminuting foreign bodies contained in the slurry is arranged on the distributor containers in each case (26).

11. Slurry distributor (10) according to claim 9 or 10,
**characterised in that**
a spiral conveyor for conveying the foreign bodies contained in the slurry in the direction of the collecting device (50) is in each case arranged in the distributor containers (26).

## Revendications

1. Dispositif d'épandage de fumier (10) doté d'un système d'épandage de fumier (16) qui présente un bras d'épandage central (18) et deux bras d'épandage latéraux (20, 22) montés à celui-ci de façon à pouvoir pivoter, qui peuvent pivoter entre une position dans laquelle ils sont alignés avec le bras d'épandage central (18) et une position dans laquelle ils sont transversaux par rapport au bras d'épandage central (18), dans lequel le bras d'épandage central (18) peut pivoter autour d'au moins un axe transversal (34) entre une position de travail rabattue vers le bas et une position de transport rabattue vers le haut,
**caractérisé en ce que**
l'au moins un axe transversal (34) est conduit de façon mobile en translation dans au moins un trou oblong (36) s'étendant dans la direction verticale du dispositif d'épandage de fumier (10) entre une position basse et une position haute.

2. Dispositif d'épandage de fumier (10) selon la revendication 1,
**caractérisé en ce que**
latéralement à côté d'une cuve de fumier (12) du dispositif d'épandage de fumier (10) sont disposées des installations de réception respectives (52) avec des éléments de retenue latéraux (54), dans lequel dans la position de transport, les côtés inférieurs respectifs des bras d'épandage latéraux (20, 22) sont disposés au-dessus des côtés supérieurs respectifs des éléments de retenue (54) lorsque l'axe transversal (34) est disposé en position haute, et sont disposés au-dessous des côtés supérieurs des éléments de retenue (54) lorsque l'axe transversal (34) est disposé en position basse.

3. Dispositif d'épandage de fumier (10) selon la revendication 1 ou 2,
**caractérisé en ce que**
le dispositif d'épandage de fumier (10) comprend une structure de support verticale (32) qui présente le trou oblong (36) au niveau duquel au moins un bras pivotant (30) est monté par une extrémité au moyen de l'axe transversal (34) et est relié par une extrémité opposée au bras d'épandage central (18).

4. Dispositif d'épandage de fumier (10) selon la revendication 3,
**caractérisé en ce que**
au niveau du bras d'épandage central (18) est monté au moins un rouleau (56) qui est adjacent à la structure de support verticale (32) lorsque le bras d'épandage central (18) se trouve dans la position de transport rabattue vers le haut.

5. Dispositif d'épandage de fumier (10) selon l'une quelconque des revendications précédentes,
**caractérisé en ce que**
le dispositif d'épandage de fumier (10) comprend au moins un cylindre hydraulique (38) relié au bras d'épandage central (18) pour faire pivoter le bras d'épandage central (18) entre la position de travail rabattue vers le bas et la position de transport rabattue vers le haut.

6. Dispositif d'épandage de fumier (10) selon l'une quelconque des revendications 3 ou 4,
**caractérisé en ce que**
le dispositif d'épandage de fumier (10) comprend au moins un cylindre hydraulique (38) relié au bras pivotant (30) pour faire pivoter le bras d'épandage central (18) entre la position de travail rabattue vers le bas et la position de transport rabattue vers le haut.

7. Dispositif d'épandage de fumier (10) selon l'une quelconque des revendications précédentes,
**caractérisé en ce que**
les bras d'épandage latéraux (20, 22) peuvent pivoter au moyen de cylindres hydrauliques (23) respectifs disposés au niveau du bras d'épandage central (18) entre la position alignée et la position transversale par rapport au bras d'épandage central (18).

8. Dispositif d'épandage de fumier (10) selon l'une quelconque des revendications précédentes,
**caractérisé en ce que**
les bras d'épandage latéraux (20, 22) présentent des tubes rigides (24) pour le transport du fumier, au niveau desquels sont montés des contenants d'épandage respectifs (26) dotés d'ouvertures de sortie du fumier (28).

9. Dispositif d'épandage de fumier (10) selon la revendication 8,
**caractérisé en ce que**
au niveau des contenants d'épandage (26) est disposé respectivement un dispositif de récupération (50) pour recevoir des corps étrangers contenus dans le fumier, lequel dispositif comprend une installation de fermeture contrainte par un ressort et pouvant être actionnée par un système hydraulique.

10. Dispositif d'épandage de fumier (10) selon la revendication 9,
**caractérisé en ce que**
au niveau des contenants d'épandage (26) est disposé respectivement un broyeur (44) pour broyer des corps étrangers contenus dans le fumier.

11. Dispositif d'épandage de fumier (10) selon la revendication 9 ou 10,
**caractérisé en ce que**
dans les contenants d'épandage (26) est disposé respectivement un convoyeur à vis pour acheminer les corps étrangers contenus dans le fumier en direction du dispositif de récupération (50).
